# EUROPÄISCHE PATENTSCHRIFT

(11) **EP 1 723 349 B1**
(45) Veröffentlichungstag und Bekanntmachung des Hinweises auf die Patenterteilung: **20.04.2011**
(21) Anmeldenummer: 05701153.8
(22) Anmeldetag: 25.01.2005
(51) Int. Cl.: F16H 7/08

(54) **KETTEN- ODER ZAHNRIEMENTRIEB**
CHAIN OR SYNCHRONOUS BELT DRIVE
ENTRAINEMENT A CHAINE OU A COURROIE

(30) Priorität: 26.02.2004 DE 102004009170
(43) Veröffentlichungstag der Anmeldung: 22.11.2006
(73) Patentinhaber: Schaeffler Technologies GmbH & Co. KG, 91074 Herzogenaurach (DE)
(72) Erfinder: ULLEIN, Thomas, 96158 Frensdorf (DE)
(86) Internationale Anmeldenummer: PCT/EP2005/000674
(87) Internationale Veröffentlichungsnummer: WO 2005/085675

(56) Entgegenhaltungen:
- EP-A- 0 672 845
- EP-A- 0 823 543
- EP-A- 1 031 704
- FR-A- 2 733 812
- PATENT ABSTRACTS OF JAPAN Bd. 014, Nr. 545 (M-1054), 4. Dezember 1990 (1990-12-04) -& JP 02 230906 A (YAMAHA MOTOR CO LTD), 13. September 1990 (1990-09-13)
- PATENT ABSTRACTS OF JAPAN Bd. 017, Nr. 423 (M-1458), 6. August 1993 (1993-08-06) -& JP 05 086893 A (SUZUKI MOTOR CORP), 6. April 1993 (1993-04-06)
- PATENT ABSTRACTS OF JAPAN Bd. 015, Nr. 253 (M-1129), 27. Juni 1991 (1991-06-27) & JP 03 081509 A (YAMAHA MOTOR CO LTD), 5. April 1991 (1991-04-05)
- PATENT ABSTRACTS OF JAPAN Bd. 016, Nr. 069 (M-1212), 20. Februar 1992 (1992-02-20) & JP 03 260304 A (SUZUKI MOTOR CORP), 20. November 1991 (1991-11-20)

## Beschreibung

### Gebiet der Erfindung

Die Erfindung betrifft einen Ketten- oder Zahnriementrieb mit mindestens einem im Trieb integrierten Ketten- oder Zahnriemenrad, über das die Kette oder der Zahnriemen geführt ist und in Eingriff steht, sowie einem die Kette oder den Zahnriemen an der dem Rad gegenüber liegenden Seite zumindest teilweise übergreifenden Überspringschutz.

### Hintergrund der Erfindung

Solche Ketten- oder Zahnriementriebe dienen beispielsweise zum Antreiben von Wellen wie z.B. der Nockenwelle oder einer Ausgleichswelle oder einer Ölpumpe einer Brennkraftmaschine. Im Zugmitteltrieb ist mindestens ein Rad, über das das Zugmittel geführt ist, integriert, wobei in der Regel mehrere Ketten- oder Riemenräder, um die das Zugmittel geschlungen ist, vorgesehen sind. Um sicherzustellen, dass das Zugmittel stets unter hinreichender Spannung steht, um das oder die Elemente, die mit dem einen oder den mehreren Rädern gekoppelt sind, anzutreiben, ist in der Regel wenigstens ein Spannelement vorgesehen, bei dem es sich vor allem bei Kettentrieben, aber auch bei Zahnriementrieben häufig um einen hydraulischen Dämpfer handelt, dessen Feder- und Rückstelleigenschaft durch Aufbau eines hydraulischen Drucks im Stellteil erzeugen lässt. Der hydraulische Druck wird beim Betrieb beispielsweise über das Motoröl der Brennkraftmaschine erzeugt. Es wann nun der Fall eintreten, beispielsweise dann, wenn der Motor abgestellt ist, dass das Öl entweicht, mithin das Spannelement mangels hydraulischer Funktion auf Anschlag liegt und folglich im Anlassmoment keine Dämpfungskraft auf den gleichwohl getriebenen Zug ausüben kann. Dies gelingt erst, wenn wieder ein hinreichender hydraulischer Dämpfungsdruck aufgebaut wurde. In der Zwischenzeit aber ist nicht sichergestellt, dass das Zugmittel, also die Kette oder der Zahnriemen, hinreichend gespannt ist, so dass es zu einem ungewünschten Überspringen der Kette oder des Riemens an einem Ketten- oder Riemenrad kommt. Um dies zu verhindern ist ein Überspringschutz vorgesehen, der im Bereich des Ketten- oder Riemenrades angeordnet ist und dieses außenseitig eng benachbart zur Kette oder dem Riemen zumindest teilweise übergreift. Hierdurch wird verhindert, dass die Kette oder der Riemen zu weit radial nach außen wandern und überspringen kann, durch den Überspringschutz wird er zurückgehalten. Ein solcher Überspringschutz ist bei bekannten Trieben an einem im Zugmitteltrieb integrierten Führungselement vorgesehen.

Es kann nun aber der Fall eintreten, dass es nicht möglich ist, einen solchen Überspringschutz einzusetzen. Dies beispielsweise dann, wenn Bauraumbeschränkungen gegeben sind, die es nicht zulassen, den Überspringschutz im relevanten Bereich zu positionieren. Ein anderer Fall ist, wenn das dem Rad benachbarte Element eine Spannschiene ist, die keine feste Position einnimmt, nachdem sie zu Spannzwecken beweglich ist. Schließlich ist als weiterer Fall zu nennen, wenn das benachbarte Führungselement im Kettentrieb liegt, es also nicht möglich ist, dieses unter entsprechender Verlängerung außenseitig übergreifen zu lassen.

Aus der JP 02230906 A ist ein Trieb mit den Merkmalen des Oberbegriffes des Anspruchs 1 bekannt.

### Aufgabe der Erfindung

Der Erfindung liegt das Problem zugrunde, einen Ketten- oder Zahnriementrieb anzugeben, der auch in Fällen, in denen es nicht möglich ist, aufgrund konstruktiver Gegebenheiten im interessierenden Ketten- oder Zahnriementrieb einen Überspringschutz vorzusehen, gleichwohl eine Möglichkeit zu bieten, ein Überspringen zu verhindern.

### Zusammenfassung der Erfindung

Zur Lösung dieses Problems ist bei einem Ketten- oder Zahnriementrieb der eingangs genannten Art erfindungsgemäß vorgesehen, dass der Überspringschutz an einem eine benachbarte Kette oder einen benachbarten Zahnriemen führenden oder spannenden Element vorgesehen ist.

Die Erfindung nutzt vorteilhaft den Umstand, dass häufig dem interessierenden Ketten- oder Zahnriementrieb, bei dem es aus welchen Gründen auch immer, insbesondere aus den eingangs genannten Gründen, nicht möglich ist, bei triebeigenen Elementen einen Überspringschutz vorzusehen, ein weiterer Trieb benachbart liegt. Der Überspringschutz wird quasi triebextern positioniert, wofür ein führendes oder spannendes Element des benachbarten Ketten- oder Zahnriementriebs genutzt wird. Vor allem in Zugmitteltrieben in Brennkraftmaschinen sind häufig parallele Triebe, die mitunter auch kinematisch miteiner gekoppelt sind, vorgesehen, so dass es möglich ist, einem in einem benachbarten Zugmitteltrieb eingebundenen Führungs- oder Spannelement eine Doppelfunktion dahingehend zukommen zu lassen, dass es gleichzeitig dem Überspringschutz im zu schützenden Zugmitteltrieb dient.

Der benachbarte Zugmitteltrieb kann ein beliebiger Zugmitteltrieb sein, der vom interessierenden Zugmitteltrieb kinematisch entkoppelt ist. Gleichermaßen ist es aber auch denkbar, dass beide Zugmitteltriebe dergestalt kinematisch gekoppelt sind, dass die benachbarte Kette oder der benachbarte Zahnriemen ebenfalls über das gemeinsame Ketten- oder Zahnriemenrad oder ein mit diesem gekoppeltes Ketten- oder Zahnriemenrad geführt ist.

Der Überspringschutz selbst kann nach einer ersten Erfindungsausgestaltung einstückig mit dem führenden oder spannenden Element des benachbarten Zugmitteltriebes verbunden sein, welches Element aus Kunststoff oder Metall, vornehmlich Aluminium gefertigt sein kann.

Die letztendliche Materialwahl hängt vom Einsatzzweck und den im Betrieb herrschenden Bedingungen, insbesondere den einwirkenden Kräften ab.

Für eine sichere Führung ist es zweckmäßig, wenn der Überspringschutz in Form wenigstens eines einer vorzugsweise der Außenkontur der zu übergreifenden Kette oder des Zahnriemens entsprechend geformten, vom Element seitlich vorspringenden Platte oder eines entsprechend geformten Ansatzes ausgeführt ist, wobei auch andere Formen, die nicht der Außenkontur angepasst sind, denkbar sind. Diese Platte oder dieser Ansatz stehen vom führenden oder spannenden Element seitlich ab, sie stehen also aus der Ebene des benachbarten Zugmitteltriebs hervor und ragen in die Ebene des relevanten Zugmitteltriebs, wo der Überspringschutz seine Funktion ausüben soll, heraus. Die zur Kette oder dem Riemen gewandte Seite der Platte oder des Ansatzes ist entsprechend der Kontur ausgeführt, so dass sich eine möglichst großflächiger Übergriff ergibt. Natürlich ist es auch denkbar, den Überspringschutz mehrteilig mit entsprechenden Abschnitten, die die Kette bzw. den Riemen um einen entsprechenden Winkel umgreifen, auszuführen. Insbesondere im Falle einer Platte ist es zweckmäßig, wenn diese über ein Stützelement zum Element hin abgestützt ist. Dies bietet eine hinreichende Stabilität, sollte die Kette oder der Riemen an den Überspringschutz schlagen, wenn er sich etwas aus seiner Eingriffsstellung bewegt. Ein solches Stützelement kann beispielsweise als Steg oder dergleichen ausgeführt sein.

In einer konkreten Erfindungsausgestaltung ist das Element, das die Doppelfunktion, nämlich die eigentliche Funktion im eigenen Zugmitteltrieb wie auch die Überspringschutzfunktion zum benachbarten Zugmitteltrieb ausübt, ein im Antrieb einer Ölpumpe integrierter Ketten- oder Zahnriemenspanner ist. Alternativ kann natürlich auch jedweder andere benachbarte Zugmitteltrieb, z.B. ein zweiter Steuertrieb (sofern es sich beim ersten Trieb um einen Steuertrieb handelt), oder um einen Ausgleichswellentrieb oder dergleichen handeln.

Neben dem Ketten- oder Zahnriementrieb selbst betrifft die Erfindung ferner ein Spann- oder Führungselement zur Integration in einen Ketten- oder Zahnriementrieb zum Spannen oder Führen der Kette oder des Zahnriemens, mit wenigstens einem seitlich aus der Spann- oder Führungsebene des Elements vorspringenden Überspringschutz für eine zur Kette oder zum Zahnriemen benachbart geführte Kette oder Zahnriemen. Weitere vorteilhafte Ausgestaltungen des erfindungsgemäßen Spann- oder Führungselements ergeben sich aus den Unteransprüchen.

### Kurze Beschreibung der Zeichnungen

- Figur 1: zeigt in Form einer Prinzipdarstellung zwei benachbarte Zug- mitteltriebe, wobei in einem Zugmitteltrieb ein erfindungsgemä- ßes Spann- oder Führungselement integriert ist,
- Figur 2: zeigt eine Perspektivansicht eines Ausschnitts der Zugmittel- triebdarstellung in Fig. 1,
- Figur 3: zeigt den Ausschnitt aus Fig. 2 in einer anderen Perspektivan- sicht, und
- Figur 4: zeigt eine Perspektivdarstellung eines erfindungsgemäßen Spann- oder Führungselements.

### Detaillierte Beschreibung der Zeichnungen

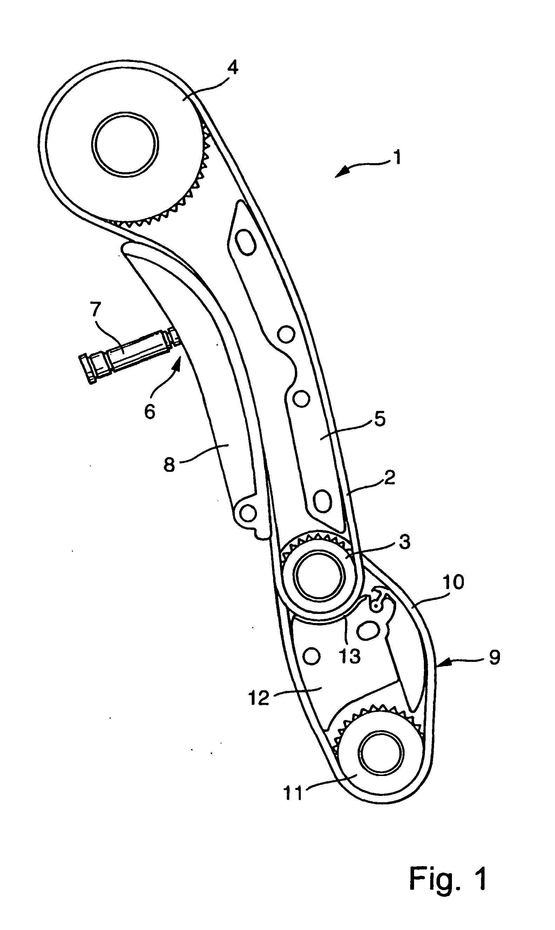

Fig. 1 zeigt einen erfindungsgemäßen Zugmitteltrieb 1, bestehend aus dem Zugmittel in Form einer Kette 2, die um ein treibendes Kettenrad 3 sowie ein zweites Kettenrad 4 geführt ist, welches Kettenrad 4 mit einer Einlass-Nockenwelle, die nicht näher gezeigt ist, gekoppelt ist. Über den Kettentrieb 1 wird die Nockenwelle gesteuert. Zum Führen der Kette 2 ist eine Führungsschiene 5 im Inneren des Zugmitteltriebs vorgesehen. Zum Spannen der Kette 2 ist ein Spannelement 6 angeordnet, bestehend aus einem die zum Spannen erforderliche Rückstellkraft erzeugenden Element 7, z.B. einem hydraulischen Dämpfer, an dem ein Spannschiene 8 angeordnet ist. Der hydraulische Dämpfer 7 drückt den Spannschiene 8 gegen die Kette 2, die hierüber gespannt wird.

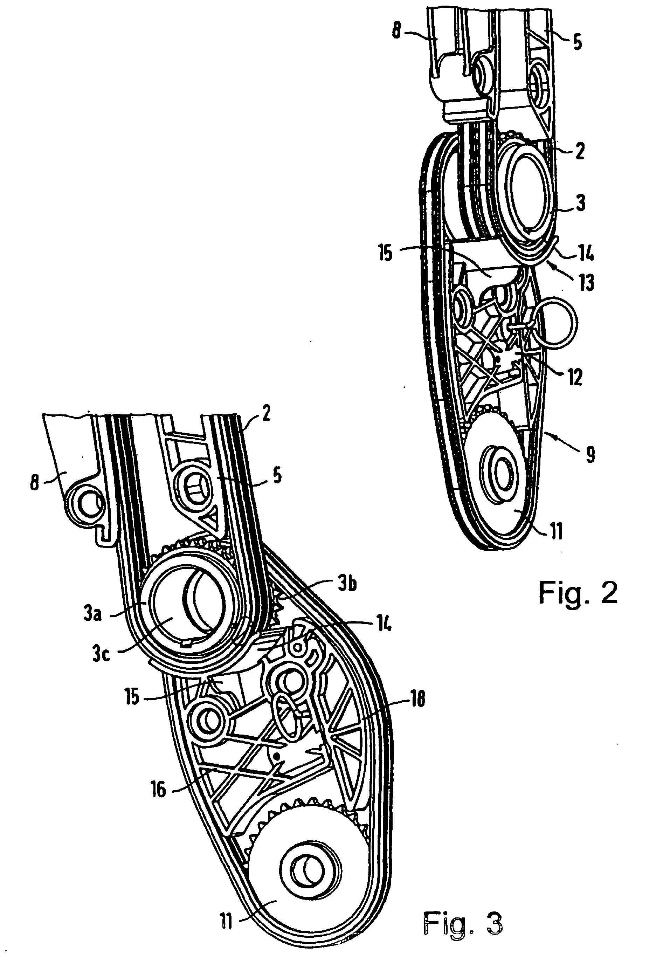

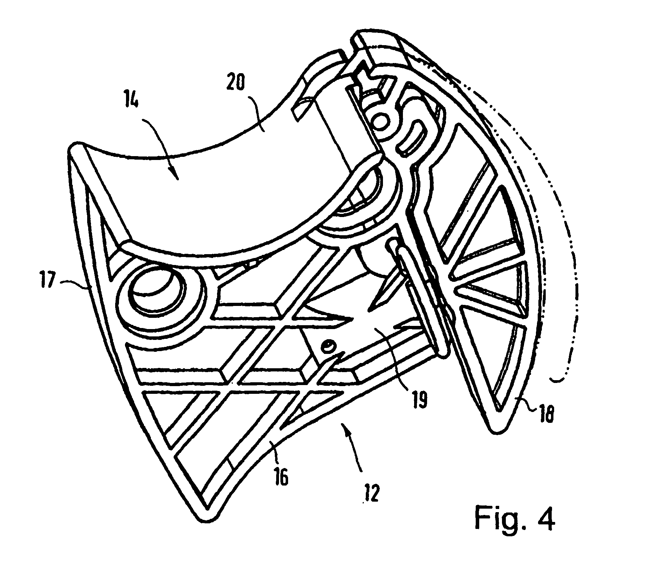

Gezeigt ist ferner ein zweiter Zugmitteltrieb 9, der dem ersten Zugmitteltrieb benachbart ist, dessen Ebene also parallel dazu liegt. Auch dieser weist eine Kette 10 auf, die über ein Kettenrad 11 geführt ist, über welches beispielsweise eine Ölpumpe angetrieben wird. Die Kette 10 ist ferner über das Kettenrad 3 geführt, so dass beide Zugmitteltriebe 1, 9 kinematisch miteinander gekoppelt sind. Wie aus den Figuren 2 und 3 ersichtlich ist, handelt es sich bei dem Kettenrad 3 um ein zweiteiliges Kettenrad, bestehend aus dem Kettenradteil 3a und dem Kettenrad 3b, die über eine Innenhülse 3c miteinander drehfest gekoppelt sind. Zum Spannen der Kette 10 ist im Inneren des Kettentriebs 9 ein Spannelement 12 vorgesehen, auf das nachfolgend bezüglich Fig. 4 noch näher eingegangen wird.

Um zu verhindern, dass sich die Kette 2 aus ihrer Umschlingung des Kettenrades 3 löst und überspringt, ist am Spannelement 12 ein Überspringschutz 13 in Form eines seitlich nach außen vorspringenden, flächigen Ansatzes oder einer Platte 14 vorgesehen. Dieser Ansatz oder die Platte 14 springt, siehe die Figuren 2, 3 und 4, aus der Ebene des Zugmitteltriebs 9 seitlich hervor und ist in der Montagestellung, wie in den Figuren gezeigt, so positioniert, dass sie die Kette 2 in dem Bereich, in dem sie das Kettenrad 3 umschlingt, zumindest teilweise übergreift. Der vorspringende Ansatz oder die Platte 14 ist dabei derart geformt, dass die der Kette 2 zugewandte Seite im Wesentlichen der Kettenform im Übergriffsbereich entspricht. Über ein Stützelement 15 ist der Ansatz oder die Platte 14 zum Spannelement 12 hin abgestützt. Aufgrund des geringen Abstands, den der Ansatz oder die Platte 14, die in der Montagestellung ortsfest ist, zur Kette 2 einnimmt, wird ein Überspringen wirkungsvoll verhindert.

Fig. 4 zeigt das aus den Figuren 1 - 3 bekannte Spannelement 12 in einer vergrößerten Detailansicht. Das Spannelement 12 hat eine waben- oder kammerartige Struktur bestehend aus einem feststehenden Teil 16, an dem eine Führungsfläche 17 für die Kette 10 vorgesehen ist, sowie einen beweglichen, federnden Teil 18, der über eine in der Kammer 19 anzuordnende, nicht näher gezeigte Feder auslenkbar ist, wie durch die strichpunktierte Linie in Fig. 4 gezeigt.

Deutlich erkennbar ist der Ansatz oder die Platte 14, die seitlich hervorspringt und deren in der Montagestellung zur Kette 2 gerichtete Fläche 20 ersichtlich bogenförmig ausgeführt ist. Das Spannelement 12 selbst ist zweckmäßigerweise ein einstückiges Bauteil, das heißt, der Ansatz oder die Platte 14 ist einstückig zumindest mit dem feststehenden Teil 16 (der federnde Teil kann gegebenenfalls ein separates Teil, das am festen Teil 16 schwenkbar angebracht ist, sein). Das Spannelement kann aus Metall oder Kunststoff sein. Die Integration des Überspringschutzes in einen benachbarten Zugmitteltrieb durch Anordnen des Überspringschutzes an einem benachbarten Spann- oder Führungselement lässt auf einfache Weise die Anordnung eines Führungsschutzes auch in Bereichen zu, wo dies aufgrund konstruktiver Umstände nicht möglich ist. Der Überspringschutz kann, insbesondere im Fall einer Ausführungsform in Form einer relativ dünnwandigen Platte, auch in einen sehr schmalen Bauraum integriert werden. Aufgrund der Anordnung an einem ohnehin vorzusehenden Spann- oder Führungselement ist auch kein Montageaufwand erforderlich, im Übrigen ist eine kostengünstige Herstellung des erfindungsgemäßen Spann- oder Führungselement mit dem Überspringschutz aufgrund der Einfachheit der Ausführungsform möglich.

### Bezugszahlenliste

- 1: Zugmitteltrieb
- 2: Kette
- 3: Kettenrad
- 4: Ketten rad
- 5: Führungsschiene
- 6: Spannelement
- 7: hydraulischer Dämpfer
- 8: Spannschiene
- 9: Zugmitteltrieb
- 10: Kette
- 11: Kettenrad
- 12: Spannelement
- 13: Überspringschutz
- 14: Ansatz oder Platte
- 15: Stützelement
- 16: fester Teil
- 17: Führungsfläche
- 18: beweglich, federnder Teil
- 19: Kammer
- 20: Fläche

## Patentansprüche

1. Ketten- oder Zahnriementrieb mit mindestens einem im Trieb integrierten Ketten- oder Zahnriemenrad, über das die Kette oder der Zahnriemen (2) geführt ist und in Eingriff steht, sowie einem die Kette oder den Zahnriemen (2) an der dem Rad (3) gegenüberliegenden Seite zumindest teilweise übergreifenden Überspringschutzt (13), mit einem eine benachbarte Kette (10) oder einen benachbarten Zahnriemen führenden oder spannenden Element (12), **dadurch gekennzeichnet, dass** das Element (12) aus einem feststehenden Teil (16) besteht, an dem eine Führungsfläche (17) für die benachbarte oder den Kette Zahnriemen (10) vorgesehen ist, dass einem beweglichen federnden Teil (18), der über eine Feder auslenkbar ist wobei das Element (12) selbst ein einstückiges Bauteil ist dass der Uberspringschutz (13) in Form eines Ansatzes oder einer Platte (14) einstückig mit dem feststehenden Teil (16) verbunden ist, während der federnde Teil (18) ein separates Teil ist, das am feststehenden Teil (16) schwenkbar angebracht ist.

2. Ketten- oder Zahnriementrieb nach Anspruch 1, **dadurch gekennzeichnet, dass** die benachbarte Kette oder der benachbarte Zahnriemen (10) ebenfalls über das gemeinsame Ketten- oder Zahnriemenrad (3) oder ein mit diesem gekoppeltes Ketten- oder Zahnriemenrad (3a, 3b) geführt ist.

3. Ketten- oder Zahnriementrieb nach Anspruch 1, **dadurch gekennzeichnet, dass** das Spannelement (12) aus Kunststoff oder Metall ist.

4. ketten- oder Zahnriementrieb nach Anspruch 1, **dadurch gekennzeichnet, dass** der Überspringschutz (13) entsprechend der Außenkontur der zu übergreifenden Kette oder des Zahnriemens (2) geformt ist.

5. Ketten- oder Zahnriementrieb nach Anspruch 1, **dadurch gekennzeichnet, dass** die Platte oder der Ansatz (14) über ein Stützelement (15) zum Spannelement (12) hin abgestützt ist.

6. Ketten- oder Zahnriementrieb nach Anspruch 1, **dadurch gekennzeichnet, dass** das Spannelement (12) ein im Antrieb einer Ölpumpe integrierter Ketten- oder Zahnriemenspanner ist.

## Claims

1. Chain drive or toothed belt drive having at least one sprocket or toothed belt pulley which is integrated in the drive and over which the chain or toothed belt (2) is guided and engages, and also having a jump guard (13) which extends at least partially over the chain or the toothed belt (2) at the side opposite the wheel (3), having an element (12) which guides or tensions an adjacent chain (10) or an adjacent toothed belt, **characterized in that** the element (12) is composed of a stationary part (16), on which is provided a guide surface (17) for the adjacent chain or the toothed belt (10), and of a movable resilient part (18) which can be deflected by means of a spring, with the element (12) itself being a single-piece component, and **in that** the jump guard (13), in the form of a shoulder or a plate (14), is integrally connected to the stationary part (16) while the resilient part (18) is a separate part which is pivotably attached to the stationary part (16).

2. Chain drive or toothed belt drive according to Claim 1, **characterized in that** the adjacent chain or the adjacent toothed belt (10) is likewise guided over the common sprocket or toothed belt pulley (3) or over a sprocket or toothed belt pulley (3a, 3b) coupled thereto.

3. Chain drive or toothed belt drive according to Claim 1, **characterized in that** the tensioning element (12) is composed of plastic or metal.

4. Chain drive or toothed belt drive according to Claim 1, **characterized in that** the jump guard (13) is shaped correspondingly to the outer contour of the chain or toothed belt (2) over which it is to extend.

5. Chain drive or toothed belt drive according to Claim 1, **characterized in that** the plate or the shoulder (14) is supported in the direction of the tensioning element (12) by means of a support element (15).

6. Chain drive or toothed belt drive according to Claim 1, **characterized in that** the tensioning element (12) is a chain or toothed belt tensioner integrated in the drive of an oil pump.

## Revendications

1. Entraînement à chaîne ou à courroie dentée, comprenant au moins un pignon de chaîne ou de courroie dentée intégré dans l'entraînement, par le biais duquel la chaîne ou la courroie dentée (2) est guidée et est en engagement, ainsi qu'une protection contre les sauts (13) venant en prise au moins en partie par le dessus avec la chaîne ou la courroie dentée (2) du côté opposé au pignon (3), avec un élément (12)guidant ou serrant une chaîne adjacente (10) ou une courroie dentée adjacente, **caractérisé en ce que** l'élément (12) se compose d'une partie fixe (16) sur laquelle est prévue une surface de guidage (17) pour la chaîne adjacente ou la courroie dentée (10), et d'une partie élastique mobile (18), qui peut être déviée au moyen d'un ressort, l'élément (12) étant lui même un composant d'une seule pièce, et **en ce que** la protection contre les sauts (13) en forme de pièce ajoutée ou de plaque (14) est connectée d'une seule pièce à la partie fixe (16), tandis que la partie élastique (18) est une pièce séparée qui est montée de manière pivotante sur la partie fixe (16).

2. Entraînement à chaîne ou à courroie dentée selon la revendication 1, **caractérisé en ce que** la chaîne adjacente ou la courroie dentée adjacente (10) est également guidée par le biais du pignon de chaîne ou de courroie dentée commun (3) ou par le biais d'un pignon de chaîne ou de roue dentée (3a, 3b) accouplé à celui-ci.

3. Entraînement à chaîne ou à courroie dentée selon la revendication 1, **caractérisé en ce que** l'élément de serrage (12) est en plastique ou en métal.

4. Entraînement à chaîne ou à courroie dentée selon la revendication 1, **caractérisé en ce que** la protection contre les sauts (13) est formée de manière à correspondre au contour extérieur de la chaîne ou de la courroie dentée (2) à saisir par le dessus.

5. Entraînement à chaîne ou à courroie dentée selon la revendication 1, **caractérisé en ce que** la plaque ou la pièce ajoutée (14) est supportée par le biais d'un élément de support (15) vers l'élément de serrage (12).

6. Entraînement à chaîne ou à courroie dentée selon la revendication 1, **caractérisé en ce que** l'élément de serrage (12) est un dispositif de serrage de chaîne ou de courroie dentée intégré dans l'entraînement d'une pompe à huile.
